**Europäisches Patentamt**

**European Patent Office**

**Office européen des brevets**

(19)

(11) Veröffentlichungsnummer: **0 165 496**
**B1**

(12) **EUROPÄISCHE PATENTSCHRIFT**

(45) Veröffentlichungstag der Patentschrift:
02.11.88

(51) Int. Cl.⁴: **A 01 G 25/16**

(21) Anmeldenummer: **85106295.0**

(22) Anmeldetag: **22.05.85**

(54) **Hydroautomatisches Steuerventil für eine Abzweigung einer Verteilungsleitung eines Berieselungssystems in steilem Gelände.**

(30) Priorität: **22.05.84 BG 65590/84**

(43) Veröffentlichungstag der Anmeldung:
**27.12.85 Patentblatt 85/52**

(45) Bekanntmachung des Hinweises auf die Patenterteilung:
**02.11.88 Patentblatt 88/44**

(84) Benannte Vertragsstaaten:
**AT DE FR GB IT NL**

(56) Entgegenhaltungen:
**US-A-3 459 207**
**US-A-3 667 498**

(73) Patentinhaber: **INSTITUT PO MECHANIKA I BIOMECHANIKA, Akademik Bontchev Str., Block 8, Sofia 1113 (BG)**

(72) Erfinder: **Georgiev, Vesselin Jordanov, Dipl.- Ing., Quartal Darveniza Paprat- Strasse 27, Sofia (BG)**
Erfinder: **Mednikarov, Vladimir Stefanov, Dipl.- Ing., Venelin- Strasse 15, Sofia (BG)**

(74) Vertreter: **Finck, Dieter, Patentanwälte v. Füner, Ebbinghaus, Finck Mariahilfplatz 2 & 3, D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein hydraulisches bzw. hydroautomatisches Steuerventil für eine Abzweigung einer Verteilungsleitung eines Berieselungssystems in steilem Gelände mit einem senkrecht angeordneten zylindrischen Gehäuse mit einer Eingangsöffnung und einer Ausgangsöffnung von und zu einer Hauptverteilungsrohrleitung und einer Ausgangsöffnung zu einer Rohrleitungsabzweigung, sowie mit einem Zylinder mit einem Kolben, wobei der unter dem Kolben befindliche Raum des Zylinders mit einer zusätzlichen Steuerrohrleitung des Berieselungssystems verbunden ist.

Das Steuersystem wird in stationären und halbstationären Berieselungssystemen für die Bewässerung landwirtschaftlicher Kulturen eingesetzt.

Es ist ein hydroautomatisches Ventil zum Umschalten einer Rohrleitungsabzweigung mit Programmfernsteuerung bekannt (BG-A-36 064), das aus einem Schieber, der in einem zylindrischen Gehäuse mit Ein- und Ausgangsöffnungen von und zu einer Hauptverteilungsrohrleitung und Ausgangsöffnung zu einer Rohrleitungsabzweigung angeordnet ist, die aus einem einen Kolben aufweisenden Zylinder besteht. Der unter dem Kolben befindliche Raum des Zylinders ist mit einer zusätzlichen Steuerrohrleitung des Berieselungssystems verbunden. Der über dem Kolben befindliche Raum steht in Verbindung mit einem Behälter für Wasser und Luft und über ein Abdrosselungsgitter mit der Eingangsöffnung des zylindrischen Gehäuses.

Nachteilig bei dem bekannten hydroautomatischen Ventil ist die unzuverlässige Schiebersteuerung bei einer langsamen Bildung des Signals für gesenkten Druck in den Eingangsöffnungen; die fehlende Möglichkeit zum Umschalten des Schiebers bei Vorhandensein eines restlichen hydrostatischen Drucks in den Eingangsöffnungen des Ventils, welcher z. B. durch die Denivellierung des Geländes, auf dem das Berieselungssystem montiert ist, hervorgerufen wird; die komplizierte Bauart des Ventils, da ein Behälter für Wasser und Luft und ein Abdrosselungsgitter erforderlich sind; die erforderliche vorherige Reinigung des Wassers von mechanischen Beimischungen, deren Eindringen in den Zylinder und das Abdrosselungsgitter vermieden werden muß und die komplizierte Bauart des Schiebers, aufgrund derer die Ausmaße der Schieberkammer und des Gehäuses vergrößert werden.

Die der Erfindung zugrunde liegende Aufgabe besteht nun darin, das hydroautomatische Steuerventil für eine Abzweigung einer Verteilungsleitung eines Berieselungssystems auf steilen Geländen in kompakter und vereinfachter Bauweise so auszubilden, daß eine zuverlässige Wirkungsweise gewährleistet wird, wobei gleichzeitig eine Reinigung des für Berieselungszwecke verwendeten Wassers von mechanischen Beimischungen entfallen soll.

Diese Aufgabe wird ausgehend von dem hydroautomatischen Steuerventil der eingangs genannten Art erfindungsgemäß dadurch gelöst, daß an den beiden Enden des zylindrischen Gehäuses ortsfest ein oberer und ein unterer ringförmiger Anschlag vorgesehen sind, zwischen denen im zylindrischen Gehäuse frei und miteinander verschiebbar ein oberer und ein unterer Stirnverschluß angeordnet sind. Der obere Stirnverschluß ist als Scheibe mit einer sich koaxial zum zylindrischen Gehäuse erstreckenden Öffnung und mit auf ihrem Kreisumfang senkrecht nach unten angeordneten Füßchen ausgebildet, die an ihren unteren Enden mit nach innen zur Achse gerichteten Zähnchen enden. Die Zähnchen sind frei in einem flachen ringförmigen Kanal auf dem Kreisumfang des unteren Stirnverschlusses angeordnet, welcher mit einer koaxialen kegelförmigen Kuppe versehen ist. Am unteren Ende des unteren Stirnverschlusses ist ein tiefer ringförmiger Kanal ausgebildet. Der tiefe ringförmige Kanal ist über sich parallel zur Achse erstreckende axiale Öffnungen mit dem zwischen dem oberen und unteren Stirnverschluß befindlichen Raum verbunden. Das zylindrische Gehäuse ist über eine in der Längsrichtung des Gehäuses zentral angeordnete seitliche Eingangsöffnung und durch einen Ausgangskrümmer oberhalb des oberen ringförmigen Anschlags mit der Hauptverteilungs-Rohrleitung des Bewässerungssystems, und durch eine unter dem unteren ringförmigen Anschlag angeordneten Kammer mit seitlicher Ausgangsöffnung mit der Rohrleitungsabzweigung verbunden. Am Boden der Kammer ist koaxial zu dem zylindrischen Gehäuse der Zylinder mit dem stiftförmig ausgebildeten Kolben angeordnet, dessen unter dem Kolben befindlicher Raum über eine Öffnung mit der zusätzlichen Steuerleitung des Berieselungssystems in Verbindung steht.

Der Außendurchmesser des oberen Stirnverschlusses und der Außendurchmesser des unteren Endes des unteren Stirnverschlusses weisen die gleichen Ausmaße auf und sind größer als die Öffnungen des unteren und oberen ringförmigen Anschlags des zylindrischen Gehäuses.

Der Durchmesser der Öffnung des oberen Stirnverschlusses ist kleiner als der Durchmesser der Basis der kegelförmigen Kuppe des unteren Stirnverschlusses. Die Höhe der Zähnchen des oberen Stirnverschlusses ist kleiner als die Höhe des flachen ringförmigen Kanals des unteren Stirnverschlusses. Der Abstand vom oberen Ende der seitlichen Eingangsöffnung bis zu dem oberen ringförmigen Anschlag ist dem Abstand vom unteren Ende der Öffnung bis zum unteren ringförmigen Anschlag und der Gesamthöhe der Scheibe und des unteren Stirnverschlusses gleich. Der senkrechte Hub des stiftförmigen Kolbens ist größer als der senkrechte Hub des oberen und des unteren Stirnverschlusses.

Mit dem erfindungsgemäßen Steuerventil läßt sich ein äußerst zuverlässiger Betrieb, unabhängig von der Bildungsgeschwindigkeit der hydraulischen Steuersignale und von dem restlichen hydrostatischen Wasserdruck in der Hauptrohrleitung erreichen. Außerdem weist das Steuerventil eine kompakte und einfache Bauart mit minimaler Anzahl sich funktionell bewegender Elemente auf. Dazu kommt noch, daß das für die Berieselung verwendete Wasser nicht vorher von teilchenförmigen Beimischungen gereinigt zu werden braucht.

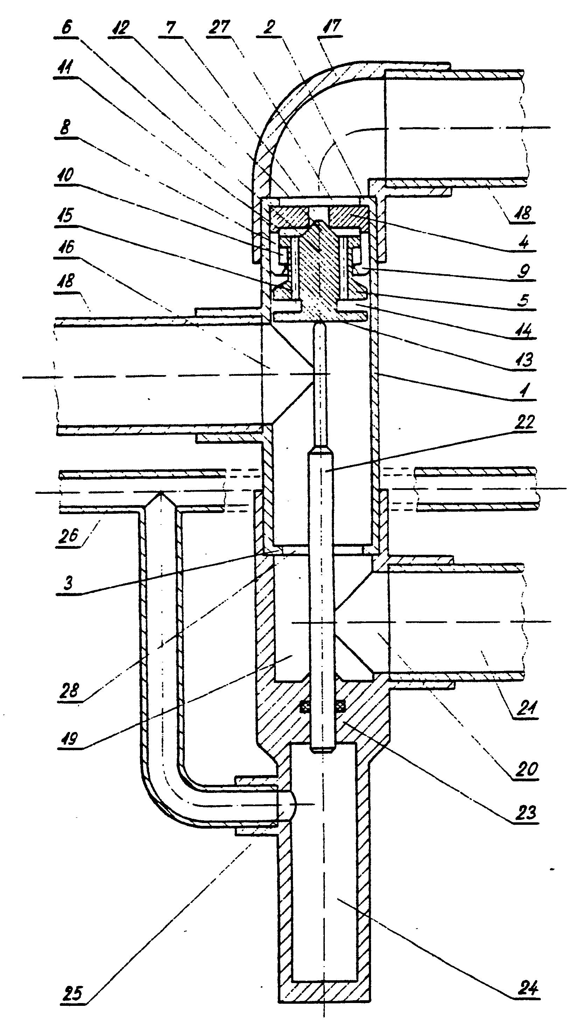

Anhand der Zeichnung, die im Axialschnitt eine Ausführungsform des Steuerventils zeigt, wird die Erfindung näher erläutert.

Das erfindungsgemäße hydroautomatische Ventil besteht aus einem senkrecht angeordneten zylindrischen Gehäuse 1, an dessen beiden Enden ortsfest ein oberer ringförmiger Anschlag 2 und ein unterer ringförmiger Anschlag 3 angeordnet sind. Zwischen den Anschlägen 2 und 3 sind im Gehäuse 1, gleitend und zueinander bewegbar ein oberer 4 und ein unterer Stirnverschluß 5 angebracht. Der obere Stirnverschluß 4 hat die Form einer Scheibe mit einer Öffnung 7 längs der Achse 6 des zylindrischen Gehäuses 1 und mit auf ihrem Kreisumfang senkrecht nach unten gerichteten drei oder mehreren Füßchen 8, welche an ihrem unteren Ende in nach innen zur Achse 6 gerichteten Zähnchen 9 enden. Die letzteren sind gleitend in einem flachen ringförmigen Kanal 10 auf der Kreisfläche des unteren Stirnverschlusses 5 angeordnet, welcher eine kegelförmige Kuppe 12 längs der Achse 6 aufweist, wobei am unteren Ende 13 des unteren Stirnverschlusses 5 ein tiefer ringförmiger Kanal 14 ausgebildet ist. Der Kanal 14 ist über parallel zur Achse liegende Axialöffnungen 15 mit dem zwischen dem unteren Stirnverschluß 4 und dem oberen Stirnverschluß 5 befindlichen Raum verbunden. Das zylindrische Gehäuse 1 ist über eine zentral zu seiner vertikalen Achse 6 angeordnete seitliche Eingangsöffnung 16 und über eine Ausgangskrümmer 17 oberhalb des oberen ringförmigen Anschlags 2 mit der Hauptverteilungsrohrleitung 18 des Berieselungssystems verbunden und über eine unter dem unteren ringförmigen Anschlag 3 angeordnete Kammer 19 mit einer seitlichen Ausgangsöffnung 20 an eine Rohrleitungsabzweigung 21 angeschlossen. Am Boden der Kammer 19 sind koaxial zum zylindrischen Gehäuse 1 ein stiftförmig ausgebildeter Kolben 22 und ein Zylinder 23 angeordnet, deren dem Kolben 22 befindlicher Raum 24 über eine Öffnung 25 mit einer zusätzlichen Steuerrohrleitung 26 des Berieselungssystems verbunden ist. Der Außendurchmesser des oberen Stirnverschlusses 4 und der Außendurchmesser des unteren Endes 13 des unteren Stirnverschlusses 5 sind gleich und größer als die Öffnungen 27 und 28, welche entsprechend in dem oberen ringförmigen Anschlag 2 und in dem unteren ringförmigen Anschlag 3 des zylindrischen Gehäuses 1 ausgeführt sind. Der Durchmesser der Öffnung 7 des oberen Stirnverschlusses 4 ist kleiner als der Durchmesser der Basis der kegelförmigen Kuppe 12 des unteren Stirnverschlusses 5. Die Höhe der Zähnchen 9 des oberen Stirnverschlusses 4 ist kleiner als die Höhe des flachen ringförmigen Kanals 10 von dem unteren Stirnverschluß 5. Die Entfernung, d.h. der Abstand vom oberen Ende der seitlichen Eingangsöffnung 16 des zylindrischen Gehäuses 1 bis zu dem oberen ringförmigen Anschlag 2 ist dem Abstand vom unteren Ende derselben Öffnung 16 bis zu dem unteren ringförmigen Anschlag 3 und der Gesamthöhe des oberen Stirnverschlusses 4 und des unteren Stirnverschlusses 5 gleich. Der senkrechte Hub des stiftförmigen Kolbens 22 ist größer als der senkrechte Hub des oberen Stirnverschlusses 4 und des unteren Stirnverschlusses 5.

Die Wirkungsweise des erfindungsgemäßen hydroautomatischen Steuerventils ist folgende: Bei hydraulischen Signalen für einen verminderten Druck des Wassers in der Hauptverteilungsrohrleitung 18 und einen erhöhten Druck in der zusätzlichen Steuerrohrleitung 26 des Berieselungssystems wird der stiftförmige Kolben 22 nach oben verschoben und drückt den unteren Stirnverschluß 5 zusammen mit dem oberen Stirnverschluß 4 nach oben, bis der letztere in den oberen ringförmigen Anschlag 2 und die kegelförmige Kuppe 12 in die Öffnung 7 gedruckt werden. Bei den nächsten hydraulischen Signalen für einen verminderten Druck des Wassers in der zusätzlichen Steuerrohrleitung 26 und für einen erhöhten Druck des Wassers in der Hauptrohrleitung 18 kehrt der stiftförmige Kolben 22 in seine untere Endstellung zurück, während die beiden Stirnverschlüsse 4 und 5 in ihrer oberen Endstellung gehalten vom Druck des Wassers bleiben, welches vom Gehäuse 1 über die Kammer 19 und die seitliche Ausgangsöffnung 20 zu der Rohrleitungsabzweigung 21 fließt. Nachdem die Wasserzuführung zu der Rohrleitungsabzweigung 21 eingestellt ist, wird in der Hauptrohrleitung 18 ein Signal für verminderten Druck gebildet, bei welchem der untere Stirnverschluß 5 zuerst die Öffnung 7 freigibt, wobei er bis zu den Zähnchen 9 des oberen Stirnverschlusses herunterrutscht. Der Druck des Wassers beiderseits des oberen Stirnverschlusses 4 gleicht sich schnell aus. Der obere Stirnverschluß 4 sinkt dann nach unten zusammen mit dem unteren Stirnverschluß 5 bis sein unteres Ende 13 gegen den unteren ringförmigen Anschlag 3 anliegt. Bei allen folgenden Signalen für einen erhöhten und verminderten Wasserdruck in der Hauptrohrleitung 18 bleibt die Rohrleitungsabzweigung 21 geschlossen, wobei das Wasser durch das Gehäuse 1 und den Ausgangskrümmer 17 zu den nächsten hydroautomatischen Ventilen und den entsprechenden Rohrleitungsabzweigungen längs der Hauptverteilungsrohrleitung 18 strömt, indem es diese der Reihe nach ein- und ausschließt. Um alle hydroautomatischen Ventile gleichzeitig in Ausgangsstellung zu setzen, müssen ein hydraulisches Signal für einen erhöhten Wasserdruck in der zusätzlichen Steuerrohrleitung 26 und ein Signal für einen verminderten Wasserdruck in der Hauptverteilungsrohrleitung 18 des Berieselungssystems gebildet werden.

**Patentansprüche**

1. Hydroautomatisches Steuerventil für eine Abzweigung einer Verteilungsleitung eines Berieselungssystems in steilem Gelände mit einem senkrecht angeordneten zylindrischen Gehäuse (1) mit einer Eingangsöffnung (16) und einer Ausgangsöffnung von und zu einer Hauptverteilungsrohrleitung (18) und einer Ausgangsöffnung (20) zu einer Rohrleitungsabzweigung (21), sowie mit einem Zylinder (23) mit einem Kolben (22) , wobei der unter dem Kolben (22) befindliche Raum des Zylinders (23) mit einer zusätzlichen Steuerrohrleitung (26) des Berieselungssystems verbunden ist, dadurch gekennzeichnet, daß an den beiden Enden des zylindrischen Gehäuses (1) ortsfest ein oberer (2) und ein unterer ringförmiger Anschlag (3) vorgesehen sind, zwischen denen im zylindrischen Gehäuse (1) frei und miteinander bewegbar ein oberer Stirnverschluß (4) und ein unterer Stirnverschluß (5) angeordnet sind, daß der obere Stirnverschluß (4) die Form einer Scheibe mit einer Öffnung (7) längs der Achse (6) des zylindrischen Gehäuses (1) und auf ihrem Kreisumfang senkrecht nach unten gerichtete Füßchen (8) aufweist, welche an ihren unteren Enden in zur Achse gerichteten Zähnchen (9) enden, die frei in einem flachen ringförmigen Kanal (10) auf dem Kreisumfang des unteren Stirnverschlusses (5) angeordnet sind, welcher mit einer koaxialen Kegelförmigen Kuppe (12) versehen ist, daß am unteren Ende des unteren Stirnverschlusses (5) ein tiefer ringförmiger Kanal (14) ausgebildet ist, welcher über parallel zur Achse (6) verlaufende Axialöffnungen (15) mit dem Raum zwischen dem oberen Stirnverschluß (4) und dem unteren Stirnverschluß (5) verbunden ist, daß das zylindrische Gehäuse (1) über die in der Längsrichtung des Gehäuses zentral angebrachte seitliche Eingangsöffnung (16) und über einen Ausgangskrümmer (17) oberhalb des oberen ringförmigen Anschlags (2) mit der Hauptverteilungsrohrleitung (18) des Berieselungssystems in Verbindung steht und über eine unter dem unteren ringförmigen Anschlag (3) angebrachte Kammer (19) mit seitlicher Ausgangsöffnung (20) mit der Rohrleitungsabzweigung (21) verbunden ist, und daß der Zylinder (23) mit dem stiftförmig ausgebildeten Kolben (22) am Boden der Kammer (19) koaxial zu dem zylindrischen Gehäuse (1) angeordnet ist, wobei der unter dem Kolben befindliche Raum (24) über eine Öffnung (25) mit der zusätzlichen Steuerrohrleitung (26) des Berieselungssystems verbunden ist.

2. Hydroautomatisches Ventil nach Anspruch 1, dadurch gekennzeichnet, daß der Außendurchmesser des oberen Stirnverschlusses (4) und der Außendurchmesser des unteren Endes (13) des unteren Stirnverschlusses (5) gleich sind und größer als die Öffnungen (27, 28) des oberen ringförmigen Anschlags (2) bzw. des unteren ringförmigen Anschlags (3) im zylindrischen Gehäuse (1).

3. Hydroautomatisches Ventil nach Anspruch 1, dadurch gekennzeichnet, daß der Durchmesser der Öffnung (7) im oberen Stirnverschluß (4) kleiner als der Durchmesser der Basis der Kegelförmigen Kuppe (12) des unteren Stirnverschlusses (5) ist.

4. Hydroautomatisches Ventil nach Anspruch 1, dadurch gekennzeichnet, daß die Höhe der Zähnchen (9) kleiner als die Höhe des flachen ringförmigen Kanals (10) des unteren Stirnverschlusses (5) ist.

5. Hydroautomatisches Ventil nach Anspruch 1, dadurch gekennzeichnet, daß der Abstand zwischen dem oberen Ende der seitlichen Eingangsöffnung (16) des zylindrischen Gehäuses (1) und dem oberen ringförmigen Anschlag (2) dem Abstand zwischen dem unteren Ende der seitlichen Eingangsöffnung (16) und dem unteren ringförmigen Anschlag (3) der Gesamthöhe des oberen Stirnverschlusses (4) und des unteren Stirnverschlusses (5) gleich ist.

6. Hydroautomatisches Ventil nach Anspruch 1, dadurch gekennzeichnet, daß der senkrechte Hub des stiftförmigen Kolben (22) größer als der senkrechte Hub des oberen Stirnverschlusses (4) und des unteren Stirnverschlusses (5) ist.

**Claims**

1. Hydroautomatic control valve for a branch of a distribution line of an irrigation system in steep ground, with a cylindrical housing (1) arranged vertically with an entrance opening (16) and an exit opening to and from a main distribution pipeline (18) and with an exit opening (20) to a pipeline branch (21), as well as with a cylinder (23) with a piston (22), the space (24) of the cylinder (23), positioned beneath the piston (22), being connected with an additional control pipeline (26) of the irrigation system, characterized in that at both ends of the cylindrical housing (1) a fixed upper (2) and a fixed lower ring-shaped stopper (3) are provided, between which an upper front seal (4) and a lower front seal (5) are arranged in the cylindrical housing (1) so that they are free and can be moved with each other; that the upper front seal (4) has the form of a disk with an opening (7) along the axis (6) of the cylindrical housing (1), and on its circumference has small feet (8) directed perpendicularly downwards which at their lower ends finish in little teeth (9) directed to the axis, the teeth being arranged freely in a flat ring- shaped channel (10) on the circumference of the lower front seal (5) which is provided with a coaxial cone- shaped peak (12); that at the lower end of the lower front seal (5) a deeper ring-shaped channel (14) is formed which is connected with the space between the upper front seal (4) and the lower front seal (5) by way of axial openings (15) running parallel to the axis (6); that the cylindrical housing (1) is connected with the main distribution pipeline (18) of the irrigation system by way of the lateral entrance opening (16) placed centrally in the longitudinal direction of the housing, and by way of an exit bend (17) above the upper ring-shaped stopper (2), and the housing is connected with the branch (21) of the pipeline by way of a chamber (19), with a lateral exit opening (20), placed beneath the lower ring-shaped stopper (3); and that the cylinder (23) is arranged with the piston (22) formed in the shape of a pin on the floor of the chamber (19) coaxially to the cylindrical housing (1), the space (24) positioned beneath the piston being connected with the additional control pipeline (26) of the irrigation system by way of an opening (25).

2. Hydroautomatic valve according to claim 1, characterized in that the outer diameter of the upper front seal (4) and the outer diameter of the lower end (13) of the lower front seal (5) are the same and are greater than the openings (27, 28) of the upper ring- shaped stopper (2) or of the lower ring-shaped stopper (3) in the cylindrical housing (1).

3. Hydroautomatic valve according to claim 1, characterized in that the diameter of the opening (7) in the upper front seal (4) is smaller than the diameter of the base of the cone-shaped peak (12) of the lower front seal (5).

4. Hydroautomatic valve according to claim 1, characterized in that the height of the little teeth (9) is less than the height of the flat ring-shaped channels (10) of the lower front seal (5).

5. Hydroautomatic valve according to claim 1, characterized in that the distance between the upper end of the lateral entrance opening (16) of the cylindrical housing (1) and the upper ring-shaped stopper (2) is equal to the distance between the lower end of the lateral entrance opening (16) and the lower ring-shaped stopper (3), of the total height of the upper front seal (4) and of the lower front seal (5).

6. Hydroautomatic valve according to claim 1, characterized in that the vertical travel of the pin-shaped piston (22) is greater than the vertical travel of the upper front seal (4) and of the lower front seal (5).

**Revendications**

1. Soupape de commande hydro-automatique pour une dérivation d'une canalisation de distribution d'un système d'irrigation en terrain pentu, comportant un boîtier cylindrique (1) disposé verticalement et présentant une ouverture d'entrée (16) et une ouverture de sortie depuis et vers une canalisation de distribution principale (18) et une ouverture de sortie (20) vers une canalisation de dérivation (21); ainsi qu'un cylindre (23) comportant un piston (22), la chambre (24) du cylindre (23) qui est située sous le piston (22) étant reliée à une canalisation de commande supplémentaire (26) du système d'irrigation, caractérisée en ce qu'aux deux extrémités du boîtier cylindrique (1) sont prévues, fixes en position, une butée annulaire supérieure (2) et une butée annulaire inférieure (3) entre lesquelles sont disposés, dans le boîtier cylindrique (1), avec possibilité de se déplacer librement et ensemble, un obturateur frontal supérieur (4) et un obturateur frontal inférieur (5); en ce que l'obturateur frontal supérieur (4) à la forme d'un disque présentant une ouverture (7) sur l'axe (6) du boîtier cylindrique (1) ainsi que des pieds (8) dirigés verticalement vers le bas sur sa périphérie circulaire et se terminant, à leurs extrémités inférieures, par des dents (9) dirigées vers l'intérieur par rapport à l'axe et librement disposées dans un canal plat de forme annulaire (10) situé à la périphérie circulaire de l'obturateur frontal inférieur (5) qui présente une calotte conique (12) ; en ce qu'à l'extrémite inférieure de l'obturateur frontal inférieur (5) est formé un canal annulaire profond (14) qui est relié, par des ouvertures axiales (15) dirigées parallèlement à l'axe (6), à la chambre située entre l'obturateur frontal supérieur (4) et l'obturateur frontal inférieur (5) ; en ce que le boîtier cylindrique (1) est relié à la canalisation de distribution principale (18) du système d'irrigation par l'intermédiaire de l'ouverture d'entrée latérale (16) prévue en position centrale selon la direction longitudinale du boîtier et par l'intermédiaire d'un coude de sortie (17) disposé au-dessus de la butée annulaire supérieure (2), et est relié à la canalisation de dérivation (21) par l'intermédiaire d'une chambre (19) prévue sous la butée annulaire inférieure (3) et comportant une ouverture de sortie latérale (20) ; et en ce que le cylindre (23), avec le piston (22) en forme de tige, est disposé au fond de la chambre (19), coaxialement avec le boîtier cylindrique (1), étant précisé que la chambre (24) qui se trouve sous le piston est reliée, par l'intermédiaire d'une ouverture (25), avec la canalisation de commande supplémentaire (26) du système d'irrigation.

2. Soupape hydro-automatique selon la revendication 1, caractérisée en ce que le diamètre extérieur de l'obturateur frontal supérieur (4) et le diamètre extérieur de l'extrémité inférieure (13) de l'obturateur frontal inférieur (5) sont égaux et supérieurs à ceux des ouvertures (27, 28) de la butée annulaire supérieure(2) et de la butée annulaire inférieure (3) situées dans le boîtier cylindrique (1).

3. Soupape hydro-automatique selon la revendication 1, caractérisée en ce que le diamètre de l'ouverture (7) prévue dans l'obturateur frontal supérieur (4) est inférieur au diamètre de la base de la calotte conique (12) de l'obturateur frontal inférieur (5).

4. Soupape hydro-automatique selon la revendication 1, caractérisée en ce que la hauteur des dents (9) est inférieure à la hauteur du canal plat annulaire (10) de l'obturateur frontal inférieur (5).

5. Soupape hydro-automatique selon la revendication 1, caractérisée en ce que la distance entre l'extrémité supérieure de l'ouverture d'entrée latérale (16) du boîtier cylindrique (1) et la butée annulaire supérieure (2) est égale à la distance entre l'extrémité inférieure de l'ouverture d'entrée latérale (16) et la butée annulaire inférieure (3) ainsi qu'à la hauteur totale de l'obturateur frontal supérieur (4) et de l'obturateur frontal inférieur (5).

6. Soupape hydro-automatique selon la revendication 1, caractérisée en ce que la course verticale du piston en forme de tige (22) est supérieure à la course verticale de l'obturateur frontal supérieur (4) et de l'obturateur frontal inférieur (5).

0 165 496

1